# FASCICULE DE BREVET EUROPEEN

(11) **EP 2 606 738 B1**
(45) Date de publication et mention de la délivrance du brevet: **12.11.2014**
(21) Numéro de dépôt: 11194237.1
(22) Date de dépôt: 19.12.2011
(51) Int. Cl.: A23B 7/154, A23B 7/157, A23L 3/3508, A23L 3/3535, A23L 1/212, A23L 1/218

(54) **Bain de saumure pour la conservation de fruits destinés à être confits, semi-confits, glacés, aromatisés ou non.**
Lakenbad zur Konservierung von Früchten, die zur Herstellung von kandierten, halbkandierten, glacierten, aromatisierten oder nicht aromatisierten Früchten bestimmt sind
Brine bath for conserving fruit intended for being bated, semi-bated, glazed, flavoured or not.

(43) Date de publication de la demande: 26.06.2013
(73) Titulaire: Marliagues, Jean, 84400 Apt (FR)
(72) Inventeur: Marliagues, Jean, 84400 Apt (FR)
(74) Mandataire: Roman, Alexis

(56) Documents cités:
- WO-A1-2011/121164
- US-A- 3 754 938
- US-A- 3 843 810
- US-A- 5 164 212
- US-H- 001 014
- DATABASE WPI Week 200902 Thomson Scientific, London, GB; AN 2009-A35280 XP002677174, & CN 101 133 760 A (TIANJIN XUEYING CENTURY PATENT TECHNOLOG) 5 mars 2008 (2008-03-05)
- DATABASE WPI Week 200834 Thomson Scientific, London, GB; AN 2008-E84907 XP002677175, & CN 101 066 067 A (LIAONING FRUIT TREE SCI RES INST) 7 novembre 2007 (2007-11-07)
- DATABASE FSTA [Online] INTERNATIONAL FOOD INFORMATION SERVICE (IFIS), FRANkFURT-MAIN, DE; 1992, VIJAY SETHI: "Preservation of raw mango slices (var. Neelum) for use in pickle and chutney.", XP002677154, Database accession no. FS-1992-07-J-0024 & VIJAY SETHI: "Preservation of raw mango slice (var. Neelum) for use in pickle and chutney", JOURNAL OF FOOD SCIENCE AND TECHNOLOGY, INDIA, vol. 28, no. 1, 1991, pages 54-56, INDIA
- DATABASE FSTA [Online] INTERNATIONAL FOOD INFORMATION SERVICE (IFIS), FRANkFURT-MAIN, DE; 1976, PIFFERI P G: "Candying technology. I. Effect of the nature of preserving brine on the candying yield of cherries. (translated)", XP002677155, Database accession no. FS-1976-05-J-0640 & PIFFERI P G: "Candying technology. Effect of the nature of preserving brine on the candying yield of cherries", INDUSTRIA CONSERVE, vol. 50, no. 1, 1975, pages 17-22, INDUSTRIA CONSERVE 1975 INST. DI TECNOLOGIE CHIMICHE SPECIALE, FAC. DI CHIMICA IND., UNIV. DI BOLOGNA, ITALY

## Description

### Domaine technique de l'invention.

L'invention a pour objet un bain de saumure pour la conservation de fruits destinés à être confits, semi-confits, glacés, aromatisés ou non. Elle a également pour objet un procédé de conservation de fruits destinés à être confits, semi-confits , glacés, aromatisés ou non. Elle a encore pour objet les fruits conservés selon ledit procédé et leur utilisation pour la préparation de fruits confits, semi-confits, glacés, aromatisés ou non.

Elle concerne le domaine technique de la transformation et de la conservation des fruits et légumes.

### État de la technique.

Les fruits fournissent une source abondante et bon marché de substances nutritives (fibres, vitamines, sels minéraux, etc.). Cependant, ils ne sont généralement disponibles que pendant la période de récolte et dans des zones géographiques précises. De plus, la plupart des fruits ne restent que très peu de temps consommables si on ne les conserve pas rapidement. En effet, les fruits sont sujets à des dégradations microbiennes et à des altérations d'arômes et de couleur très rapides dues principalement aux enzymes.

De nombreuses techniques ont été développées au cours des années afin d'allonger la durée de conservation des fruits le plus longtemps possible depuis leur lieu de récolte jusqu'à leur transformation en produits confits, semi-confits, sucrés, aromatisés ou non, ou leur utilisation comme ingrédients pour des préparations alimentaires, artisanales ou industrielles telles que les pâtisseries, les yaourts, les crèmes, les glaces, ou autres. L'une de ces techniques consiste à soumettre les fruits frais à un blanchiment à l'eau chaude ou à la vapeur. Cependant, cette technique présente l'inconvénient d'accélérer la maturation des fruits et d'entraîner une certaine perte de leurs qualités nutritionnelles et organoleptiques, notamment lorsque les fruits sont sensibles à la chaleur, tels que les fraises, framboises, le kiwi, le melon, les cerises, les abricots, les poires, etc. Il convient également de citer la technique de congélation qui consiste à conserver les fruits à basse température en vue de pouvoir en profiter tout au long de l'année, indépendamment des saisons. Cependant, cette technique, même bien conduite, aboutit à une destruction cellulaire due à la cristallisation de l'eau libre présente dans le fruit. En outre, la consistance du fruit après décongélation n'est plus aussi ferme que dans le cas du fruit frais. Par ailleurs, le blanchiment comme la congélation sont consommateurs d'énergie et ne sont pas toujours disponibles par exemple dans les pays en voie de développement.

La conservation de fruits par immersion dans un bain de saumure à base d'agents sulfitants tels que l'anhydride sulfureux (dioxyde de soufre) et de sels de calcium est aussi bien connue dans le secteur de transformation et de conservation de fruits et de légumes. Cette technique présente un intérêt économique certain d'un point de vue énergétique et est susceptible de prolonger la période de disponibilité des fruits hors saisons grâce à la présence d'agents sulfitants qui aident à protéger les fruits contre les détériorations causées par l'oxydation et à inhiber la croissance microbienne dans les fruits. Cependant, les agents sulfitants sont considérés comme potentiellement allergisant à 10 ppm ou plus (teneur exprimée en dioxyde de soufre). Or, une conservation optimale des caractéristiques des fruits selon cette technique ne peut être obtenue que lorsque l'agent sulfitants est mis en oeuvre à des doses très importantes (souvent supérieures à 1000 ppm) qui rendent le fruit inutilisable tel quel. Par ailleurs, des opérations de lavage consommatrices d'eau sont souvent nécessaires pour ramener la teneur en dioxyde de soufre résiduel dans le fruit en dessous de 100 ppm, c'est le cas par exemple des cerises au marasquin destinées à être confites et préparées selon le procédé décrit dans le document USH001014 (Kraut et al.). En effet, selon ce procédé les cerises conservées dans une saumure à base de dioxyde de soufre et d'un sel de calcium contiennent entre environ 2000 à environ 6000 ppm de dioxyde de soufre (voir colonne 2, lignes 38 à 52 de USH001014) et doivent subir un lessivage dans un courant d'eau pendant 24 à 48 heures (voir colonne 3, lignes 40 à 44 de USH001014) pour ramener la teneur résiduelle en dioxyde de soufre en dessous de 100 ppm. Par ailleurs, au cours de cette étape de lessivage, les fruits subissent une forte perte de texture et de saveur.

Ainsi, compte tenu de ce qui précède, l'invention a pour but de proposer un bain de saumure à base de dioxyde de soufre ou ses dérivés permettant d'allonger la durée de conservation des fruits fraîchement récoltés.

Un autre but de l'invention est de fournir un tel bain qui permette de maintenir les caractéristiques physiologiques, notamment la texture, des fruits pendant une période relativement longue, pouvant aller jusqu'à au moins un an, de préférence jusqu'à au moins un an et demi.

Encore un autre but de l'invention est de proposer un tel bain qui permette de répondre aux exigences réglementaires en vigueur concernant les sulfites.

L'invention a également pour but de fournir un procédé de conservation de fruits fraîchement récoltés par immersion dans un bain de saumure à base d'anhydride sulfureux ou ses dérivés, qui permette de réduire l'étape de lessivage trop consommatrice d'eau.

Un autre but de l'invention est de fournir un tel procédé, qui permette d'obtenir des fruits conservés dont les caractéristiques physiologiques, notamment la texture, ont été maintenues pendant une période relativement longue, pouvant aller jusqu'à au moins un an, de préférence jusqu'à au moins un an et demi.

Encore un autre but de l'invention est de fournir un tel procédé, d'obtenir des fruits conservés qui répondent aux exigences réglementaires en vigueur concernant les sulfites et qui sont prêts à être utilisés pour la préparation de fruits confits, semi-confits, glacés, aromatisés ou non.

La présente invention vise également à obtenir des fruits conservés qui répondent aux exigences réglementaires en vigueur concernant les sulfites et dont la texture est comparable à celles que peuvent avoir les mêmes fruits fraîchement récoltés.

### Divulgation de l'invention.

II a à présent été trouvé que ces buts peuvent être atteints en totalité ou en partie au moyen du bain de saumure qui est décrit ci-après.

La solution proposée par l'invention est un bain de saumure pour la conservation de fruits destinés à être confits, semi-confits, glacés, aromatisés ou non, ledit bain contenant un agent sulfitant, un sel de calcium une base inorganique et de l'eau tel que défini dans la revendication 1. Ce bain de saumure est remarquable en ce qu'il comprend en outre un oligoélément de zinc.

Lors de ses recherches visant à améliorer le procédé de conservation des fruits par sulfitage, la demanderesse a découvert de manière inattendue, que grâce à l'adjonction d'un oligoélément de zinc dans la composition du bain de saumure, les fruits fraîchement récoltés, en particulier par récolte mécanique, pouvaient être conservés pendant une période relativement longue, pouvant aller jusqu'à au moins un an, de préférence jusqu'à au moins un an et demi, sans toutefois présenter les inconvénients précités.

En effet, il a été constaté de manière surprenante qu'une telle adjonction permet :
- de maintenir les caractéristiques physiologiques, notamment la texture, des fruits, pendant une période relativement longue, pouvant aller jusqu'à au moins un an, de préférence jusqu'à au moins un an et demi, de sorte que la la texture des fruits conservés est comparable à celles que peuvent avoir les mêmes fruits fraîchement récoltés, et ce même lorsqu'ils sont récoltés par des moyens mécaniques.
- d'obtenir des fruits conservés dont la teneur en dioxyde de soufre résiduel est sensiblement réduite.
- et subsidiairement, de limiter, d'une part les coûts de conservation des fruits et d'autres part l'impact sur l'environnement, puisqu'il n'est plus nécessaire d'utiliser de larges quantités de dioxyde de soufre ou ses dérivés.

D'autres caractéristiques préférées de l'invention sont listées ci-dessous, chacune de ces caractéristiques pouvant être considérée seule ou en combinaison avec les caractéristiques remarquables définies ci-dessus :
- l'oligoélément de zinc présent dans ledit bain est un sel organique ou inorganique de zinc choisi parmi le chlorure de zinc, le sulfate de zinc, l'acétate de zinc, et leurs mélanges.
- l'oligoélément de zinc préféré est le sulfate de zinc.
- l'oligoélément de zinc est présent dans ledit bain en une proportion comprise entre 1 à 15 ‰ p/p_{bain de saumure}, de préférence égale à environ 7,5 ‰ p/p_{bain} de saumure.
- l'agent sulfitant présent dans ledit bain est choisi parmi le dioxyde de soufre, le sulfite de sodium, le bisulfite de sodium, le métabisulfite de sodium, et leurs mélanges.
- l'agent sulfitant est présent dans ledit bain en une proportion comprise entre 2 et 10‰ p/p_{bain de saumure}, de préférence égale à environ 5 ‰ p/p_{bain de saumure}.
- le sel de calcium présent dans ledit bain est choisi dans la liste suivante: chlorure de calcium, carbonate de calcium, hydroxyde de calcium, sulfate de calcium, ascorbate de calcium, citrate monocalcique, citrate dicalcique, citrate tricalcique; orthophosphatemonocalcique, orthophosphate dicalcique, orthophosphate tricalcique, diphosphate dicalcique, dihydrogéno diphosphate de calcium, ou leurs mélanges.
- le sel de calcium est présent dans ledit bain en une proportion comprise entre 2 et 10 ‰ p/p_{bain de saumure}, de préférence égale à environ 5 ‰ p/p_{bain de saumure}.
- la base inorganique présente dans ledit bain est choisie parmi, le carbonate de sodium, le bicarbonate de sodium, et leurs mélanges.
- la base inorganique est présente dans ledit bain en une proportion comprise entre 1 et 10 ‰ p/p_{bain de saumure}, de préférence égale à environ 3,5 ‰ p/p_{bain de saumure}.
- Le bain de saumure comprend préférentiellement :
   - environ 7,5 ‰ p/p_{bain de saumure} d'un oligoélément de zinc,
   - environ 5 ‰ p/p_{bain desaumure} d'un agent sulfitant,
   - environ 5 ‰ p/p_{bain de saumure} d'un sel de calcium,
   - environ 3,5 ‰ p/p_{bain de saumure} d'une base inorganique, et
   - l'eau Q.S.P 1000 ‰ p/p_{bain de saumure}.

Un autre aspect de l'invention concerne un procédé pour conserver des fruits destinés à être confits, semi-confits, glacés, aromatisés ou non, lequel procédé consistant à :
a) immerger les fruits fraîchement récoltés dans un bain de saumure conforme à l'invention,
b) conserver les fruits immergés dans ce bain de saumure pendant un temps déterminé,
c) séparer, ensuite, les fruits du bain de saumure et les rincer à l'eau froide en vue d'éliminer la couche de sels superficielle.

Le procédé de l'invention est avantageux en ce qu'il permet de réduire la quantité d'agents sulfitants mis en oeuvre dans le bain de saumure. Il offre également l'avantage de ne nécessiter qu'un simple rinçage à l'eau froide des fruits à leur sortie du bain de saumure. Il permet également d'obtenir des fruits conservés qui sont conformes aux exigences réglementaires en matière de sulfites, tout en préservant leurs caractéristiques physiologiques, notamment leur texture, pendant une période relativement longue pouvant aller jusqu'à au moins un an, mieux encore pendant au moins un an et demi. Par ailleurs, ce procédé ne nécessite ni traitement thermique, ni aucun appareillage spécial pour sa mise en oeuvre sur le plan industriel. Il peut être pratiqué à proximité des lieux de récoltes.

Le procédé selon l'invention possède donc un potentiel important.

Encore un autre aspect de l'invention concerne un fruit destiné à être confit, semi-confit, glacé, aromatisé ou non, caractérisé par le fait qu'il est obtenu par un procédé selon la présente invention.

En effet, les fruits conservés selon le procédé de l'invention sont conformes aux exigences réglementaires en matière de sulfites, présentent de meilleures qualités physiologiques, en particulier une meilleur texture, et peuvent être directement utilisés pour la préparation de fruits confits, semi-confits, sucrés, aromatisés ou non, sans subir aucune opération de lessivage trop consommatrice d'eau et susceptible d'altérer la texture et la saveur des fruits.

L'invention vise également l'utilisation de fruits conservés selon la présente invention pour la préparation de fruits confits, semi-confits, sucrés, aromatisés ou non.

D'autres buts et avantages de la présente invention apparaîtront au cours de la description qui va suivre qui n'est donnée qu'à titre indicatif et qui n'a pas pour but d'en limiter la portée.

### Modes de réalisation de l'invention

L'invention est basée sur la découverte que l'adjonction d'un oligoélément de zinc dans la composition du bain de saumure, permet de :
- réduire fortement la teneur en agents sulfitants du bain de saumure,
- prolonger la disponibilité des fruits pendant au moins un an, de préférence pendant au moins un an et demi, tout en préservant leurs caractéristiques physiologiques, notamment leur texture, et
- répondre aux exigences réglementaires concernant les agents sulfitants.

L'oligoélément de zinc utilisé dans le cadre de la présente invention est un sel organique ou inorganique de zinc, choisi parmi le chlorure de zinc, le sulfate de zinc, l'acétate de zinc, et leurs mélanges. L'oligoélément de zinc ayant donné de bons résultats est le sulfate de zinc.

La teneur de l'oligoélément de zinc utilisé peut varier dans de larges limites dans la mesure où elle apporte une teneur d'au moins 1 ‰ p/p_{bain de saumure}. De préférence, cette teneur n'excède pas 15 ‰ p/p_{bain de saumure}. En pratique, l'oligoélément de zinc est utilisé à une teneur d'environ 7,5 ‰ p/p_{bain de saumure}.

Dans la présente description, le rapport « p/p_{bain de saumure} » représente une teneur exprimée en poids calculée sur la composition totale du bain de saumure.

Un autre constituant essentiel du bain de saumure selon la présente invention est un agent sulfitant dont la fonction principale est de permettre une protection des fruits contre les détériorations causées par les microorganismes de dégradation et/ou par les réactions enzymatiques et/ou non-enzymatiques. Cet agent sulfitant peut être choisi parmi le dioxyde de soufre, le sulfite de sodium, le bisulfite de sodium, le métabisulfite de sodium, et leurs mélanges.

La teneur de l'agent sulfitant mis en oeuvre dans le bain de saumure selon l'invention est généralement inférieure à 10 ‰ p/p_{bain de saumure}. En pratique, la teneur de l'agent sulfitant est comprise entre 2 et 10 ‰ p/p_{bain de saumure}, de préférence égale à environ 5 ‰ p/p_{bain de saumure}.

En effet, la demanderesse a constaté de manière inattendue, que l'adjonction d'un oligoélément de zinc dans le bain de saumure conformément à l'invention, permet de réduire la quantité d'agents sulfitant nécessaire pour l'obtention d'une protection optimale des fruits contre les détériorations causées par les microorganismes de dégradation et/ou par les réactions enzymatiques et/ou non-enzymatiques.

Un autre constituant essentiel du bain de saumure selon la présente invention est un sel de calcium. Les sels de calcium sont bien connus dans l'état de l'art pour leur fonction de raffermissement de la texture des fruits et des légumes.

Le sel de calcium mis en oeuvre selon la présente invention est un sel acceptable d'un point de vue alimentaire, de préférence choisi dans la liste suivante : chlorure de calcium, carbonate de calcium, hydroxyde de calcium, sulfate de calcium, ascorbate de calcium, les citrates de calcium (monocalcique, dicalcique ou tricalcique), orthophosphates de calcium (monocalcique, dicalcique, ou tricalcique), diphosphate dicalcique; dihydrogéno diphosphate de calcium, ou leurs mélanges. En association étroite avec les constituants du bain de saumure selon l'invention, le sel de calcium contribue à prolonger la durée de conservation, tout en préservant les qualités physiologiques des fruits, et en particulier à garder les fruits fermes ou craquants pendant toute la durée de conservation. Le sel de calcium préféré étant le chlorure de calcium.

La teneur en sel de calcium ayant donné de bons résultats de conservation conformément à l'invention, est de préférence comprise entre 2 et 10 ‰ p/p_{bain de saumure}, mieux encore égale à environ 5 ‰ p/p_{bain de saumure}.

Selon une caractéristique avantageuse de l'invention, le pH du bain de saumure est ajusté à une valeur comprise entre 2 et 4, par l'addition d'une base inorganique choisie de préférence parmi le carbonate de sodium, le bicarbonate de sodium, et leurs mélanges. En pratique, la teneur de la base inorganique mise en oeuvre pour atteindre une telle valeur de pH, est comprise entre 1 et 10 ‰ p/p_{bain de saumure}, de préférence égale à environ 3,5 ‰ p/p_{bain de saumure}.

De bons résultats de conservation des fruits ont été obtenus avec un bain de saumure comprenant :
- environ 7,5 ‰ p/p_{bain de saumure} d'un oligoélément de zinc,
- environ 5 ‰ p/p_{bain de saumure} d'un agent sulfitant,
- environ 5 ‰ p/p_{bain de saumure} d'un sel de calcium,
- environ 3,5 ‰ p/p_{bain de saumure} d'une base inorganique, et
- l'eau Q. S. P 1000 ‰ p/p_{bain de saumure}.

La préparation du bain de saumure selon l'invention est réalisée par le mélange de ses constituants, par toute méthode connue en soi par l'homme du métier. En général, on se sert d'un récipient (cuve, fût ou autre) de grande dimension, on le remplit avec de l'eau de qualité alimentaire, ensuite on y introduit successivement et sous agitation mécanique ou électromagnétique, l'agent sulfitant, le sel de calcium, la base inorganique puis l'oligo-élément de zinc dans les proportions indiquées. Par « eau de qualité alimentaire », on entend selon la présente invention une eau potable, déminéralisée et/ou désinfectée par exemple à l'UV.

Le bain de saumure selon l'invention s'est révélé efficace pour prolonger la durée de disponibilité de fruits hors saisons de récolte sans présenter d'impact négatif sur leurs qualités physiologiques.

Aussi, l'invention a encore pour objet l'utilisation du bain de saumure tel que défini ci-dessus pour la conservation de fruits destinés être confits, semi-confits, glacés, aromatisés ou non.

La présente invention a également pour objet un procédé pour conserver des fruits destinés à être confits, semi-confits, glacés, aromatisés ou non, lequel procédé consistant à :
a) immerger les fruits fraîchement récoltés dans un bain de saumure conforme à l'invention,
b) conserver les fruits immergés dans ce bain de saumure pendant un temps déterminé,
c) séparer, ensuite, les fruits du bain de saumure et les rincer à l'eau froide en vue d'éliminer la couche de sels superficielle.

Le procédé de conservation selon l'invention est de préférence mis en oeuvre dans un récipient hermétiquement fermé pour éviter l'évaporation du dixoyde de soufre et de l'eau ainsi qu'une perte d'arôme. Le récipient peut avoir une capacité allant de 10 litres jusqu'à 250.000 litres. Le procédé de l'invention peut également être réalisé dans un récipient non hermétiquement fermé. Dans ce cas, des rajouts de bain de saumure peuvent s'avérer nécessaire.

A titre d'exemple, non limitatif, on peut citer parmi les fruits pouvant être conservés par le procédé selon la présente invention : le melon, les fraises, les cerises, la pêche, la nectarine, la pomme, la poire, les prunes, les oranges, les mandarines, le citron vert, le citron jaune, le pamplemousse, le kiwi, la mangue, l'ananas, l'abricot, les mûres, les framboises, les raisins, la figue, la pastèque, etc.

Préalablement à l'étape a) du procédé selon l'invention, les fruits fraîchement récoltés peuvent être triés, nettoyés et lavés à l'eau potable, afin d'éliminer tout reste de saleté et/ou d'insecticides. Ils sont, ensuite, selon le cas épluchés, découpés en morceaux ou en tranches, dénoyautés et/ou épépinés. Ils peuvent également être mis dans le bain de saumure tout de suite après ramassage dans les champs.

La quantité de fruits mis en oeuvre à l'étape a) du procédé selon l'invention est généralement, comprise entre 200 kg et 300 kg par 200 litres de bain de saumure conforme à l'invention. Il convient de noter que les fruits peuvent être mis dans des récipients pouvant contenir entre 10000 et 20000 kilos à condition de respecter la proportion fruits /bain de saumure.

En pratique, les fruits sont immergés et stockés dans le bain de saumure conforme à l'invention à une température comprise entre 10°C et 30°C, de préférence à la température ambiante (environ 25°C).

La durée de séjour des fruits dans le bain de saumure à l'étape a) est généralement d'au moins un an, mieux encore d'au moins un an et demi.

Les fruits sont ensuite retirés du bain de saumure puis rincés pour éliminer la couche de sels superficielle. Le rinçage peut être effectué à l'eau froide (à la température ambiante), par immersion ou douchage.

Des analyses pratiquées à l'issue du procédé selon l'invention, ont montré que les fruits conservent bien leurs propriétés physiologiques, notamment leur texture, ce qui n'est pas le cas d'une conservation par immersion classique sans l'adjonction d'un oligoélément de zinc ou par congélation ou blanchiment.

Aussi, l'invention a encore pour objet l'utilisation de fruits ainsi obtenus pour la préparation de fruits destinés être confits, semi-confits, glacés, aromatisés ou non.

Par ailleurs, les fruits obtenus après confisage, présentent avantageusement une teneur en dioxyde de soufre résiduel bien inférieure à 10 ppm (ou 10 mg/kg), mieux encore inférieure à 5 ppm.

Le procédé suivant la présente invention offre également l'avantage de ne nécessiter aucun traitement thermique, ni aucun appareillage spécial pour sa mise en oeuvre sur le plan industriel. Il peut être pratiqué à proximité des lieux de récoltes.

Note :
- bien que non décrit, l'homme du métier pourra de façon évidente adapter le procédé de l'invention à d'autres végétaux, y compris les légumes.
- la teneur en dioxyde de soufre a été déterminée par un dosage iodométrique.

L'invention va maintenant être décrite en référence aux exemples suivants donnés à titre illustratif et non limitatif.

### Exemple 1 : Préparation d'un bain de saumure conforme à l'invention

On prépare selon les techniques habituelles un bain aqueux de conservation répondant à la formule suivante :

| **Ingrédients** | **Teneur en ‰ p/p_{bain de saumure}** |
|---|---|
| dioxyde de soufre | 5 |
| chlorure de calcium | 5 |
| bicarbonate de soude | 3,5 |
| sulfate de zinc | 7,5 |
| eau qsp | 1000 |

### Exemple 2 : Détermination de la fermeté des fruits au potentiomètre

La fermeté des fraises, cerises blanches et tranches de melons conservés pendant 18 mois conformément à l'invention, a été mesurée au moyen d'un pénétromètre à main pour fruits, commercialisé sous la marque MECMESIN®.

| | **Fermeté des fruits au pénétromètre** | | |
|---|---|---|---|
| | **Fraises** | **Cerises blanches** | **Tranche de melons** |
| **Conservation par immersion sans adjonction de ZnSO₄** | 0 | 1,36 | 0,30 |
| **Conservation dans le bain de saumure de l'exemple 1** | 0,70 | 2,35 | 1,50 |

Cet exemple montre que pour chacun des fruits étudiés, la conservation dans le bain de saumure de l'exemple 1, donne des fruits nettement plus fermes et donc plus faciles à travailler. Par ailleurs, ces fruits ne présentent aucun mauvais goût lié à l'utilisation du dioxyde de soufre.

## Revendications

1. Bain de saumure pour la conservation de fruits destinés à être confits, semi-confits, glacés, aromatisés ou non, ledit bain comprenant un agent sulfitant, un sel de calcium et de l'eau, le pH dudit bain étant ajusté à une valeur comprise entre 2 et 4 par l'addition d'une base inorganique, **caractérisé en ce qu'**il comprend en outre un oligoélément de zinc choisi parmi le chlorure de zinc, le sulfate de zinc, l'acétate de zinc, et leurs mélanges.

2. Bain de saumure selon la revendication 1, **caractérisé en ce que** l'oligoélément de zinc est le sulfate de zinc.

3. Bain de saumure selon la revendication 1 ou 2, **caractérisé en ce que** l'oligoélément de zinc est présent dans ledit bain en une proportion comprise entre 1 à 15 ‰ p/p_{bain de saumure}, de préférence égale à environ 7,5 ‰ p/p_{bain de saumure}.

4. Bain de saumure selon la revendication 1, **caractérisé en ce que**, l'agent sulfitant présent dans ledit bain est choisi parmi le dioxyde de soufre, le sulfite de sodium, le bisulfite de sodium, le métabisulfite de sodium, et leurs mélanges.

5. Bain de saumure selon l'une des revendications précédentes, **caractérisé en ce que** l'agent sulfitant est présent dans ledit bain en une proportion comprise entre 2 et 10‰ p/p_{bain de saumure}, de préférence égale à environ 5 ‰ p/p_{bain de saumure}.

6. Bain de saumure selon l'une des revendications précédentes, **caractérisé en ce que** le sel de calcium présent dans ledit bain est choisi dans la liste suivante : chlorure de calcium, carbonate de calcium, hydroxyde de calcium, sulfate de calcium, ascorbate de calcium, citrate monocalcique, citrate dicalcique, citrate tricalcique; orthophosphate monocalcique, orthophosphate dicalcique, orthophosphate tricalcique, diphosphate dicalcique, dihydrogéno diphosphate de calcium, ou leurs mélanges.

7. Bain de saumure selon l'une des revendications précédentes, **caractérisé en ce que** le sel de calcium est présent dans ledit bain en une proportion comprise entre 2 et 10 ‰ p/p_{bain de saumure}, de préférence égale à environ 5 ‰ p/p_{bain de saumure}.

8. Bain de saumure selon l'une des revendications précédentes, **caractérisé en ce que** la base inorganique présente dans ledit bain est choisie parmi le carbonate de sodium, le bicarbonate de sodium, et leurs mélanges.

9. Bain de saumure selon l'une des revendications précédentes, **caractérisé en ce que** la base inorganique est présente dans ledit bain en une proportion comprise entre 1 et 10 ‰ p/p_{bain de saumure}, de préférence égale à environ 3,5 ‰ p/p_{bain de saumure}.

10. Bain de saumure selon l'une des revendications précédentes, **caractérisé en ce qu**'il comprend :
• environ 7,5 ‰ p/p_{bain de saumure} d'un oligoélément de zinc,
• environ 5 ‰ p/p_{bain de saumure} d'un agent sulfitant,
• environ 5 ‰ p/p_{bain de saumure} d'un sel de calcium,
• environ 3,5 ‰ p/p_{bain de saumure} d'une base inorganique, et
• l'eau Q.S.P 1000 ‰ p/p_{bain de saumure}.

11. Procédé pour conserver des fruits destinés à être confits, semi-confits, glacés et/ou aromatisés, lequel procédé consistant à :
a) immerger les fruits fraîchement récoltés dans un bain de saumure tel que défini à l'une des revendications 1 à 10,
b) conserver les fruits immergés dans le bain de saumure pendant un temps déterminé,
c) séparer, ensuite, les fruits du bain de saumure et les rincer à l'eau froide en vue d'éliminer la couche de sels superficielle.

12. Procédé selon la revendication 11, **caractérisé par le fait que** la quantité de fruits fraîchement récoltés mis en oeuvre à l'étape a) est comprise entre de 200 kg à 300 kg par 200 litres de bain de saumure.

13. Procédé selon la revendication 11, **caractérisé par le fait que** la température du bain de saumure mise en oeuvre à l'étape (a) est comprise entre 10°C et 30°C, de préférence à environ 25°C.

14. Procédé selon les revendications 11 à 13, **caractérisé par le fait que** la durée de conservation par immersion mise en oeuvre à l'étape (a) est d'au moins un an, de préférence d'au moins un an et demi.

15. Procédé selon les revendications 11 à 14, **caractérisé en ce que** les fruits sont choisis dans la liste suivante : melon, fraises, cerises, pêche, nectarine, pomme, poire, prunes, oranges, citron vert, citron jaune, mandarines, pamplemousse, kiwi, mangue, ananas, abricot, mûres, framboises, raisins, figues, pastèques.

16. Fruit destiné à être confit, semi-confit, glacé, aromatisé ou non **caractérisé par le fait qu'**il est obtenu par un procédé selon l'une des revendications 11 à 15.

17. Utilisation d'un fruit obtenu par un procédé selon l'une des revendications 11 à 15, pour la préparation de fruits confits, semi-confits, glacés, aromatisés ou non.

## Patentansprüche

1. Lakenbad zur Konservierung von Früchten, die zur Herstellung von kandierten, halbkandierten, glacierten, aromatisierten oder nichtaromatisierten Früchten bestimmt sind, wobei das Bad ein Sulfitierungsmittel, ein Kalziumsalz und Wasser umfasst, wobei der pH-Wert des Bads durch Versetzen mit einer anorganischen Base auf einen Wert zwischen 2 und 4 eingestellt ist, **dadurch gekennzeichnet, dass** es weiterhin ein Zinkspurenelement, ausgewählt aus Zinkchlorid, Zinksulfat, Zinkacetat und ihren Mischungen, umfasst.

2. Lakenbad nach Anspruch 1, **dadurch gekennzeichnet, dass** es sich bei dem Zinkspurenelement um Zinksulfat handelt.

3. Lakenbad nach Anspruch 1 oder 2, **dadurch gekennzeichnet, dass** das Zinkspurenelement in dem Bad in einer Menge zwischen 1 bis 15‰ w/w_{Lakenbad}, vorzugweise in einer Menge von ungefähr 7,5‰ w/w_{Lakenbad}, vorliegt.

4. Lakenbad nach Anspruch 1, **dadurch gekennzeichnet, dass** das Sulfitierungsmittel, das in dem Bad vorliegt, aus der Reihe Schwefeldioxid, Natriumsulfit, Natriumhydrogensulfit, Natriumdisulfit und ihren Mischungen ausgewählt ist.

5. Lakenbad nach einem der vorhergehenden Ansprüche, **dadurch gekennzeichnet, dass** das Sulfitierungsmittel in dem Bad in einer Menge zwischen 2 und 10 ‰ w/w_{Lakenbad}, vorzugweise ungefähr 5‰ w/w_{Lakenbad}, Vorliegt.

6. Lakenbad nach einem der vorhergehenden Ansprüche, **dadurch gekennzeichnet, dass** das Kalziumsalz, das in dem Bad vorliegt, aus der folgenden Aufzählung ausgewählt ist: Kalziumchlorid, Kalziumcarbonat, Kalziumhydroxid, Kalziumsulfat, Kalziumascorbat, Monokalziumzitrat, Dikalziumzitrat, Trikalziumzitrat, Monokalziumorthophosphat, Dikaliziumorthophosphat, Trikalziumorthophosphat, Dikalziumdisphosphat, Kalziumdihydrogendiphosphat oder ihren Mischungen.

7. Lakenbad nach einem der vorhergehenden Ansprüche, **dadurch gekennzeichnet, dass** das Kalziumsalz in dem Lakenbad in einer Menge zwischen 2 und 10‰ w/w_{Lakenbad}, vorzugweise ungefähr 5‰ w/w_{Lakenbad}, Vorliegt.

8. Lakenbad nach einem der vorhergehenden Ansprüche, **dadurch gekennzeichnet, dass** die anorganische Base, die in dem Bad vorliegt, aus der Reihe Natriumcarbonat, Natriumhydrogencarbonat und ihren Mischungen ausgewählt ist.

9. Lakenbad nach einem der vorhergehenden Ansprüche, **dadurch gekennzeichnet, dass** die anorganische Base in dem Lakenbad in einer Menge zwischen 1 und 10‰ w/w_{Lakenbad}, vorzugsweise ungefähr 3,5‰ w/w_{Lakenbad}, vorliegt.

10. Lakenbad nach einem der vorhergehenden Ansprüche, **dadurch gekennzeichnet, dass** es umfasst:
• ungefähr 7,5‰ W/W_{Lakenbad} eines Zinkspurenelements,
• ungefähr 5‰ w/w_{Lakenbad} eines Sulfitierungsmittels,
• ungefähr 5‰ w/w_{Lakenbad} eines Kalziumsalzes,
• ungefähr 3,5‰ w/w_{Lakenbad} einer anorganischen Base und
• Wasser Q.S.P. 1000‰ w/w_{Lakenbad}.

11. Verfahren zum Konservieren von Früchten, die zum Kandieren, Halbkandieren, Glacieren und/oder Aromatisieren bestimmt sind, wobei das Verfahren aus folgendem besteht:
a) Eintauchen der frischgeernteten Früchte in ein wie in einem der Ansprüche 1 bis 10 definiertes Lakenbad,
b) Konservieren der eingetauchten Früchte in dem Lakenbad für einen bestimmten Zeitraum,
c) anschließend Abtrennen der Früchte von dem Lakenbad und Spülen derselben mit kaltem Wasser, um den oberflächlichen Salzbelag zu entfernen.

12. Verfahren nach Anspruch 11, **dadurch gekennzeichnet, dass** die in Schritt a) eingesetzte Menge an frischgeernteten Früchten zwischen 200 kg bis 300 kg pro 200 Liter Lakenbad liegt.

13. Verfahren nach Anspruch 11, **dadurch gekennzeichnet, dass** die Temperatur des in Schritt a) eingesetzten Lakenbads zwischen 10°C und 30°C, vorzugweise ungefähr 25°C, beträgt.

14. Verfahren nach den Ansprüchen 11 bis 13, **dadurch gekennzeichnet, dass** die in Schritt (a) eingesetzte Dauer der Tauchkonservierung mindestens ein Jahr, vorzugweise mindestens eineinhalb Jahre beträgt.

15. Verfahren nach den Ansprüchen 11 bis 14, **dadurch gekennzeichnet, dass** die Früchte aus der folgenden Aufzählung ausgewählt sind: Zuckermelone, Erdbeeren, Kirschen, Pfirsich, Nektarine, Apfel, Birne, Pflaumen, Orangen, Limette, Zitrone, Mandarinen, Grapefruit, Kiwi, Mango, Ananas, Aprikose, Brombeeren, Himbeeren, Weintrauben, Feigen und Wassermelonen.

16. Frucht, die zum Kandieren, Halbkandieren, Glacieren, Aromatisieren oder Nichtaromatisieren bestimmt ist, **dadurch gekennzeichnet, dass** sie nach einem Verfahren nach einem der Ansprüche 11 bis 15 erhalten wird.

17. Verwendung einer nach einem Verfahren nach einem der Ansprüche 11 bis 15 erhaltenen Frucht zur Herstellung von kandierten, halbkandierten, glacierten, aromatisierten oder nichtaromatisierten Früchten.

## Claims

1. Brine bath for conserving fruits intended for being candied, semi-candied, glazed, flavoured or not, said bath comprising a sulphiting agent, a calcium salt and water, the pH of said bath being adjusted to a value of between 2 and 4 by adding an inorganic base, **characterized in that** it also comprises a zinc trace element chosen from zinc chloride, zinc sulphate and zinc acetate, and mixtures thereof.

2. Brine bath according to Claim 1, **characterized in that** the zinc trace element is zinc sulphate.

3. Brine bath according to Claim 1 or 2, **characterized in that** the zinc trace element is present in said bath in a proportion of between 1 and 15‰ w/w_{brine bath}, preferably equal to approximately 7.5‰ w/w_{brine bath}.

4. Brine bath according to Claim 1, **characterized in that** the sulphiting agent present in said bath is chosen from sulphur dioxide, sodium sulphite, sodium bisulphite and sodium metabisulphite, and mixtures thereof.

5. Brine bath according to one of the preceding claims, **characterized in that** the sulphiting agent is present in said bath in a proportion of between 2 and 10‰ w/w_{brine bath}, preferably equal to approximately 5‰ w/w_{brine bath}.

6. Brine bath according to one of the preceding claims, **characterized in that** the calcium salt present in said bath is chosen from the following list: calcium chloride, calcium carbonate, calcium hydroxide, calcium sulphate, calcium ascorbate, monocalcium citrate, di calcium citrate, tricalcium citrate, monocalcium orthophosphate, dicalcium orthophosphate, tricalcium orthophosphate, dicalcium diphosphate, and calcium dihydrogen diphosphate, or mixtures thereof.

7. Brine bath according to one of the preceding claims, **characterized in that** the calcium salt is present in said bath in a proportion of between 2 and 10‰ w/w_{brine bath}, preferably equal to approximately 5‰ w/w_{brine bath}.

8. Brine bath according to one of the preceding claims, **characterized in that** the inorganic base present in said bath is chosen from sodium carbonate and sodium bicarbonate, and mixtures thereof.

9. Brine bath according to one of the preceding claims, **characterized in that** the inorganic base is present in said bath in a proportion of between 1 and 10‰ w/w_{brine bath}, preferably equal to approximately 3.5‰ w/w_{brine bath}.

10. Brine bath according to one of the preceding claims, **characterized in that** it comprises:
• approximately 7.5‰ w/w_{brine bath} of a zinc trace element,
• approximately 5‰ w/w_{brine bath} of a sulphiting agent,
• approximately 5‰ w/w_{brine bath} of a calcium salt,
• approximately 3.5‰ w/w_{brine bath} of an inorganic base, and
• waster q.s. 1000‰ w/w_{brine bath}.

11. Method for conserving fruits intended for being candied, semi-candied, glazed and/or flavoured, said method consisting in:
a) immersing the freshly harvested fruits in a brine bath as defined in one of Claims 1 to 10,
b) conserving the fruits immersed in the brine bath for a predetermined period of time,
c) subsequently separating the fruits from the brine bath and rinsing them with cold water with a view to removing the superficial layer of salts.

12. Method according to Claim 11, **characterized in that** the amount of freshly harvested fruits used in step a) is from 200 kg to 300 kg per 200 litres of brine bath.

13. Method according to Claim 11, **characterized in that** the temperature of the brine bath used in step a) is between 10°C and 30°C, preferably at approximately 25°C.

14. Method according to Claims 11 to 13, **characterized in that** the duration of conservation by immersion used in step a) is at least one year, preferably at least one and a half years.

15. Method according to Claims 11 to 14, **characterized in that** the fruits are chosen from the following list: melon, strawberries, cherries, peach, nectarine, apple, pear, plums, oranges, lime, lemon, tangerines, grapefruit, kiwi, mango, pineapple, apricot, blackberries, raspberries, grapes, figs, watermelons.

16. Fruit intended for being candied, semi-candied, glazed, flavoured or not, **characterized in that** it is obtained by means of a method according to one of Claims 11 to 15.

17. Use of a fruit obtained by means of a method according to one of Claims 11 to 15, for preparing fruits which are candied, semi-candied, glazed, flavoured or not.
